# EUROPÄISCHE PATENTSCHRIFT

(11) **EP 2 935 923 B1**
(45) Veröffentlichungstag und Bekanntmachung des Hinweises auf die Patenterteilung: **31.05.2017**
(21) Anmeldenummer: 13796084.5
(22) Anmeldetag: 28.11.2013
(51) Int. Cl.: F16C 35/067, F16C 35/02, F16C 35/077

(54) **LAGERHÜLSE MIT MANSCHETTE**
BEARING SLEEVE WITH COLLAR
DOUILLE-PALIER À MANCHON

(30) Priorität: 18.12.2012 DE 102012024703
(43) Veröffentlichungstag der Anmeldung: 28.10.2015
(73) Patentinhaber: Robert Bosch GmbH, 70442 Stuttgart (DE)
(72) Erfinder: BOLLER, Rolf, CH-4450 Sissach (CH)
(86) Internationale Anmeldenummer: PCT/EP2013/074959
(87) Internationale Veröffentlichungsnummer: WO 2014/095292

(56) Entgegenhaltungen:
- CH-A- 231 539
- DE-A1- 3 522 600
- FR-A1- 2 554 883
- US-A- 1 683 594

## Beschreibung

Die Erfindung betrifft eine Lagerhülse nach dem Oberbegriff des Patentanspruchs 1.

Eine Lagerhülse dient der radialen sowie drehbaren Lagerung einer Welle, beispielsweise einer Antriebswelle. Hierfür hat eine herkömmliche Lagerhülse eine rohrförmige Hülse, die sich in einer Längsrichtung erstreckt. Damit eine Welle in Längsrichtung in die Lagerhülse einführbar ist, ist wenigstens ein Längsende der Hülse offen ausgebildet.

Aus dem Stand der Technik ist es bekannt, im Inneren der Hülse ein erstes Radiallager anzuordnen, welches später in Kontakt mit der Welle steht. Als Radiallager eignen sich vor allem Gleit-, Kugel-, Wälz- und Nadellager. Zwischen der Welle und der Hülse ist meist ein Ringspalt ausgebildet.

Problematisch hierbei ist, dass die Lagerung der Welle mit einer solchen Lagerhülse verschiedenen äußeren Einflüssen unterliegt. So wird oftmals Wärme vom Lagergehäuse über die Lagerhülse in die Radiallager geleitet. Dies führt zu thermischen Verformungen, welche eine Erhöhung der Lagerreibung bedingen, womit oftmals die Effizienz einer Vorrichtung reduziert ist. Auch Fertigungstoleranzen des Lagersitzes im Gehäuse können über die Lagerhülse zu mechanischen Krafteinwirkungen auf das Radiallager führen, so dass dieses verformt wird. Zusätzlich führen Vibrationen und Eigenfrequenzen des Lagergehäuses und/oder der Welle zu Ungleichbelastungen des Radiallagers. Dies führt zu dynamischen Verformungen der Lagerhülse, des Radiallagers und der Welle. Erhöhte Lagerreibung und eine geringe Effizienz sind die Folge. Ferner bereiten Verwindungen des Gehäuses und/oder Biegungen der Welle eine Erhöhung von Reibungserscheinungen. Jede Lagerreibung geht einher mit einem erhöhten Lagerverschleiß, so dass die Lebensdauer der Lagerhülse und/oder der Welle gering sowie die Wartungskosten hoch sind.

Die FR 2554883 A1 offenbart eine Lagerung einer Welle in der Bohrung eines Gehäuses mittels zweier im Abstand voneinander in einer Hülse angebrachter Wälzlager, wobei die Hülse in der Bohrung des Gehäuses angeordnet ist und mit einem radial nach außen gerichteten Flansch versehen ist, der durch elastisch federnde Mittel derart an eine von der Bohrung durchdrungene Anlagefläche des Gehäuses gepresst ist, dass zwischen dieser und dem Flansch Reibschluss besteht. Hülse und Gehäuse sind mittels der vorzugsweise in axialer Richtung nachgiebigen elastisch federnden Mittel axial verspannt, wobei die elastisch federnden Mittel an einer zur Anlagefläche planparallel verlaufenden Gehäusefläche anliegen und die Hülse gegenüber dem Gehäuse in radialer Richtung abstützen.

Der Erfindung liegt daher die Aufgabe zugrunde, die Nachteile des Standes der Technik zu überwinden und eine Lagerhülse zu entwickeln, die eine dauerhaft geringe Reibung bei der Lagerung einer Welle aufweist, in einem großen Temperaturbereich einsetzbar, langlebig
und wartungsarm ist sowie geringe Herstell- und Wartungskosten aufweist. Für viele Einsatzorte der Lagerhülse ist auch eine leichte Bauweise anzustreben.

Erfindungsgemäß wird dies mit den Merkmalen des Patentanspruches 1 gelöst. Vorteilhafte Weiterbildungen sind den Unteransprüchen zu entnehmen.

Die Erfindung betrifft eine Lagerhülse zur Lagerung einer Welle , mit einer rohrförmigen Hülse, die sich in einer Längsrichtung erstreckt, und in deren Inneren ein erstes Radiallager angeordnet ist, wobei im Inneren der Hülse sowie in Längsrichtung beabstandet vom ersten Radiallager ein zweites Radiallager angeordnet ist, und dass die Hülse radial innerhalb von einer Manschette angeordnet ist, wobei zwischen der Hülse und der Manschette ein Ringspalt ausgebildet und die Manschette in Längsrichtung beabstandet von den beiden Radiallagern mit der Hülse verbunden ist.

Vorteilhaft an einer solchen erfindungsgemäßen Lagerhülse ist, dass diese mit der Manschette an oder in einem Lagersitz festlegbar ist. Fertigungstoleranzen des Lagersitzes wirken somit auf die Manschette. Die Hülse wird nicht verformt. Zudem ist die Hülse nur indirekt über die Manschette thermisch mit dem Lagersitz gekoppelt. Temperatureinflüsse ausgehend vom Gehäuse haben hierdurch nur geringe thermische Dimensionsänderungen der Hülse und damit der Radiallager zur Folge. Weiterhin erlaubt die indirekte Lagerung der Hülse im/am Lagersitz über die Manschette eine elastische Verformung der Lagerhülse, welche eine Übertragung von Schwingungen, insbesondere Resonanzschwingungen, und Stößen zwischen dem Lagersitz und der Hülse dämpft. Schwingt beispielsweise die Welle, kann sich die Hülse innerhalb der Manschette entsprechend der Welle mitbewegen. Sie kann dabei insbesondere Winkeländerungen zur Längsachse der Manschette durchführen, so dass die Radiallager stets leichtläufig sind. An den Übergängen der Verbindung sollten Kehlradien vorgesehen sein, um möglicherweise Ermüdungsbrüche durch Spannungsspitzen zu vermeiden. Außerdem ist es statisch vorteilhaft, wenn der Verbindungsbereich zwischen der Hülse und der Manschette eine größere Wandstärke aufweist als der Rest der Hülse und/oder der Rest der Manschette.

All dies führt zu einer Lagerung einer Welle mit geringer Reibung, wodurch die Lagerhülse langlebig und wartungsarm ist. Zudem sind die Herstellkosten für die Lagerung der Welle günstig, da zwar die Manschette zusätzlich zu fertigen ist, dafür jedoch die Passung des Lagersitzes weniger genau sein muss.

Eine Weiterbildung der Erfindung sieht vor, dass die Manschette in Längsrichtung zwischen den beiden Radiallagern mit der Hülse verbunden ist. Dies hat den Vorteil, dass die Kraftleitung zwischen der Hülse und der Manschette gleichverteilt erfolgt. Beide Radiallager können zudem im Wesentlichen gleich große Kräfte aufnehmen. Die Hülse wird hierbei weitestgehend ohne Drehmomente in der Achslage gehalten, wodurch die Lagerreibung und der Verschleiß gering sind.

Besonders bevorzugt ist eine Weiterbildung der Erfindung, bei der die Verbindung zwischen der Hülse und der Manschette in Längsrichtung um maximal 10 Prozent außermittig, bevorzugt um maximal 5 Prozent außermittig, und besonders bevorzugt mittig zwischen den beiden Radiallagern angeordnet ist. Hierdurch wirken von der Manschette auf die Hülse einwirkende Kräfte nur als sehr geringe Drehmomente auf die Hülse ein. Lagerreibung und Verschleiß sind dadurch minimal.

Derartig balancierte Kraftflüsse werden von einer bevorzugten Form unterstützt, bei welcher der Ringspalt in Längsrichtung einseitig offen ausgebildet ist. Ein von der Verbindung mit der Hülse weg weisendes erstes Ende der Manschette ist dann als freier Schenkel ausgebildet, der den Ringspalt radial begrenzt. An dem offenen Ende bzw. dem freien Schenkel festgelegt, verbleiben der Hülse kleine Freiheitsgrade um Ausgleichsbewegungen durchzuführen. Auf die Hülse wirken dabei insbesondere die Lagerkräfte der beiden Radiallager und die der Manschette über die Verbindung. Durch eine im Wesentlichen mittige Anordnung der Verbindung zwischen den Radiallagern ist die Hülse in Achslage austariert. Bei Schwingungen oder Stößen verschieben sich die Achslagen der Hülse und die der Manschette weitestgehend parallel. Bei Biegeschwingungen der Welle kann die Hülse zudem um die Mitte zwischen den Radiallagern wenn auch nur geringfügig - pendeln. Trotzdem kann hierbei die Manschette drehfest und/oder axialfest mit der Hülse verbunden sein, was kostengünstig, langlebig und wartungsarm ist.

Gemäß einer bevorzugten Ausführungsform der Lagerhülse sind die Hülse und die Manschette einteilig ausgebildet. Dies ist fertigungstechnisch einfach umsetzbar und verursacht geringe Herstellkosten. Geeignete Materialien für die Lagerhülsen sind Kunststoffe und Metalle. Metalle sind insbesondere bei hohen Temperaturen sowie großen Radiallagern zu bevorzugen. Gieß-, Spritz-, Sinter- und spanende Verfahren eignen sich zur Herstellung der Lagerhülse. Besonders bevorzugt sind die Hülse und die Manschette dabei von einem monolithischen Bauteil ausgebildet. Ein Fügeverfahren ist somit nicht notwendig und eine sehr hohe Verschleißfestigkeit der Verbindung erzielbar. Das Gewicht der Lagerhülse ist so auf ein Minimum reduzierbar.

Bei einer Fortentwicklung der Lagerhülse ist die Manschette in Längsrichtung kürzer als die Hülse. Damit beschränkt sich die Manschette auf eine funktional notwendige Länge. Geringe Materialkosten und eine niedrige Fertigungskomplexität werden erreicht.

Für einen optimalen Kraftfluss ist eine Weiterbildung der Lagerhülse günstig, bei der die Manschette glockenförmig ausgebildet ist. Hierdurch wird die Kraft zwischen der Manschette und der Hülse sanft umgelenkt und Schäden durch Spannungsspitzen werden vermieden.

Es hat sich als besonders vorteilhaft erwiesen, wenn sich die Manschette glockenförmig in Richtung der Verbindung mit der Hülse radial verjüngt. Damit ist die Manschette im Bereich der Verbindung bis an die Hülse heranführbar und Kräfte zwischen Manschette und Hülse werden sanft umgelenkt.

Zur Festlegung der Lagerhülse an bzw. in einem Lagersitz ist in einer näheren Ausgestaltung vorgesehen, dass die Manschette in Längsrichtung beabstandet von der Verbindung mit der Hülse eine Lageraufnahme zur Fixierung der Lagerhülse in einem Lagersitz aufweist. Damit wird sichergestellt, dass die Manschette nicht im Bereich der Verbindung in einem Lagersitz festgelegt wird. Vielmehr ist der Abstand der Aufnahme zur Verbindung vorgegeben und wird eingehalten, so dass die Lagerhülse einfach und intuitiv montierbar ist. Mithin ist der Ringspalt in radialer Richtung zwischen der Lageraufnahme und Hülse positioniert.

Eine Entwicklungsstufe der Lagerhülse empfiehlt, dass die Lageraufnahme an einem von der Verbindung zwischen der Hülse und der Manschette beabstandeten ersten Ende der Manschette angeordnet ist. Damit hat die Manschette an diesem Ende keinen Überstand. Material wird so eingespart und eine maximale Eigenfrequenz der Manschette erreicht. Mit der Hülse verbunden ist dann bevorzugt das zweite Ende der Manschette. Auch dieses zweite Ende hat dann keinen freien Überstand, was einhergeht mit geringem Materialverbrauch und einer hohen Eigenfrequenz. Eine geringe Eigenfrequenz ist auch durch knappe Überstände der Hülse über die Radiallager hinaus erzielbar. Dabei sollten die zwei Längsenden der Hülse um maximal 10 Prozent unterschiedlich weit über die beiden Radiallager hinausstehen.

Zwar kann das zweite Ende der Manschette auch gegenüberliegend von der Verbindung angeordnet sein und hier eine zweite Lageraufnahme für einen Lagersitz aufweisen. Die Lagerhülse kann so steifer und symmetrisch ausgelegt werden. Bevorzugt ist die Lageraufnahme am ersten Ende jedoch die einzige Lageraufnahme. Dadurch ist die Lagerhülse statisch bestimmt gelagert und die Konstruktion des Lagersitzes einfacher.

Eine konstruktiv einfache und kostengünstige Ausbildung der Lageraufnahme ergibt sich, wenn die Lageraufnahme ein radial umlaufender Absatz ist, besonders bevorzugt ein Flansch. Die präzise Fertigung der Lageraufnahme beschränkt sich so auf den Absatz. Ein Flansch trägt zudem dazu bei, dass ein radialer Freiraum um die restliche Manschette geschaffen wird, wodurch diese radiale Ausgleichsbewegungen durchführen kann.

Von einer weitere Ausgestaltung ist vorgesehen, dass die Manschette eine senkrecht zur Längsrichtung ausgerichtete plane erste Anschlagfläche aufweist. Dies ist fertigungstechnisch am einfachsten umsetzbar, sodass die Formtoleranzen sowohl der Lagerhülse und die des Lagersitzes exakt eingehalten werden. Es ergibt sich eine präzise Positionierung von Lagerhülse zu Lagersitz und der Verschleiß zwischen Lagersitz und Lageraufnahme ist durch die plane Anlagefläche sehr gering.

Bei einer konkreteren Konstruktion der Erfindung steht die Hülse in Längsrichtung nicht über die plane erste Anschlagfläche der Manschette hinaus. Die Lagerbuchse kann so bequem in eine Öffnung mit ebenem Boden eingesetzt werden, welcher den Anschlag für die Anschlagfläche der Manschette bildet.

Bevorzugt weist auch die Hülse eine senkrecht zur Längsrichtung ausgerichtete plane zweite Anschlagfläche auf. Eine solche kann schwimmend auf einer planen Fläche gelagert werden, sodass eine Stabilisierung der Lagerhülse durch eine Blockade der Hülse in eine Längsrichtung erfolgt. Konstruktiv günstig ist eine Kombination, bei welcher die erste Anschlagfläche der Manschette und die zweite Anschlagfläche der Hülse in einer gemeinsamen Ebene liegen. Die Anschlagflächen und eine korrespondierende Fläche können so jeweils in einem Arbeitsgang hergestellt bzw. bearbeitet werden.

Eine Optimierung der thermischen Flüsse gelingt bei einer Variante der Lagerhülse, bei der die Wandstärke der Hülse im Bereich der Radiallager im Wesentlichen homogen ist. Die Wandstärke der Hülse sollte hierfür im Bereich der Radiallager um maximal 20 Prozent, bevorzugt um maximal 10 Prozent, und besonders bevorzugt um maximal 5 Prozent variieren. Die Wandung der Hülse wird so im Betrieb möglichst gleichmäßig erwärmt.

Eine ungleichmäßige Erwärmung der Hülse und der Welle lässt sich durch eine Ergänzung erzielen, bei der die Querschnittsflächen der Hülse jeweils im Bereich der Radiallager um maximal 10 Prozent von der Aufnahmequerschnittsfläche der Radiallager abweicht. Die Aufnahmequerschnittsfläche betrifft dabei im Wesentlichen die Querschnittsfläche der später aufzunehmenden Welle im Bereich der Radiallager.

Weiterhin wird von einer Weiterentwicklung vorgesehen, dass in der Manschette wenigstens ein erster Längsschlitz ausgebildet ist. Durch einen solchen Schlitz ist der Ringspalt radial offen ausgebildet und ein Luftaustausch möglich. Die innenliegende Hülse ist so nicht durch ein Luftpolster isoliert und auch bei einer schwimmenden Lagerung der Stirnseite der Hülse ist diese durch Luft aus dem Inneren der Hülse kühlbar. Außerdem kann durch den Längsschlitz ein Fixiermittel hindurchgeführt werden, welches der Festlegung des Radiallagers in der Hülse dienen kann. Zusätzlich besteht die Option, in der Manschette wenigstens einen zweiten Längsschlitz vorzusehen. Zur radial gleichmäßigen Belastbarkeit der Lagerhülse sollten die Längsschlitze über den Umfang der Manschette gleichverteilt angeordnet sein. Außerdem sind Längsschlitze zu bevorzugen, die endseitig geschlossen ausgebildet sind. Diese erhalten die Stabilität und erlauben Materialeinsparungen und Gewichtsreduktionen.

Ferner ist eine Konstruktionsvariante günstig, bei der das erste Radiallager und/oder das zweite Radiallager wenigstens durch drei über den Umfang der Hülse gleichmäßig verteilt angeordnete Fixierschrauben fixiert ist, die von außen in die Hülse eingeschraubt sind. Hierfür werden bevorzugt Gewindelöcher für die Fixierschrauben in die Hülse eingebracht. Die Fixierschrauben können jeweils mit dem eingeschraubten Schraubenende in eine Vertiefung eingreifen, die am Außenumfang des Radiallagers ausgebildet ist.

Zum einfachen und beschädigungsfreien Einführen der Welle in die Hülse wird an deren Längsenden bevorzugt eine innenseitig umlaufende Einführschräge vorgesehen. Das Einführen der Manschette in einen Lagersitz gelingt besonders einfach, wenn die Manschette am ersten Ende eine außenseitig umlaufende Einführschräge aufweist.

Die erfindungsgemäße Lagerhülse ist nunmehr mit der Manschette, insbesondere mit der Lageraufnahme, in oder an einem Lagersitz eines Lagergehäuses festlegbar. Um den Rest der Manschette und der Hülse sollte ein radialer Freiraum verbleiben, damit beide die erfindungsgemäß beabsichtigten Ausgleichsbewegungen durchführen können.

Die Zeichnung stellt ein Ausführungsbeispiel der Erfindung dar. Es zeigt:
- Fig. 1:: Einen Längsschnitt mit einer Welle, die in einer Lagerhülse gelagert ist, welche wiederum in einem Lagersitz festgelegt ist und
- Fig. 2:: einen Querschnitt durch die Lagerhülse gemäß Fig. 1.

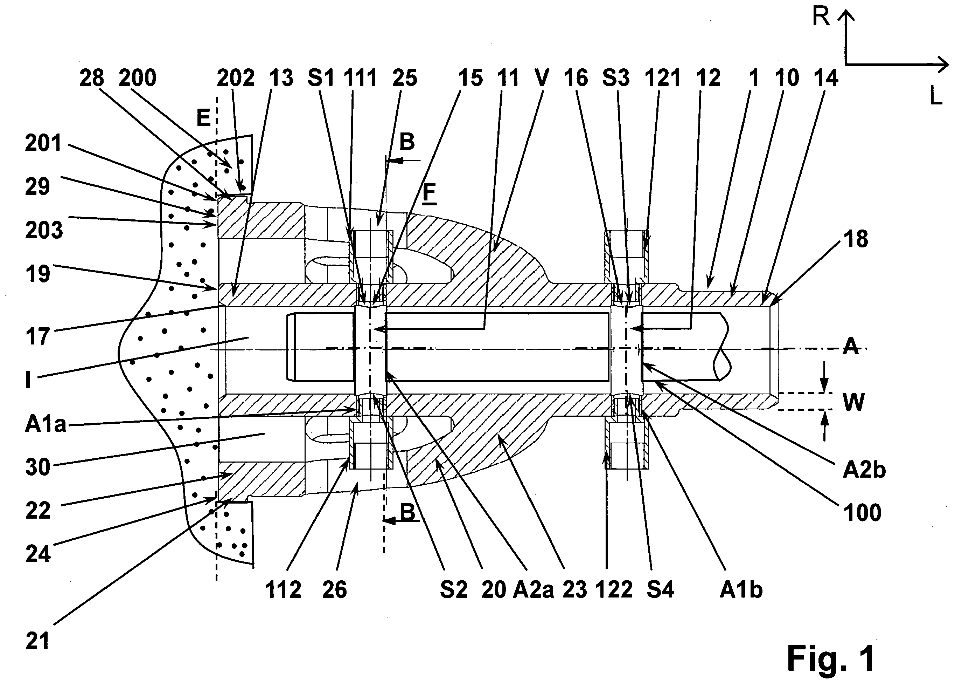

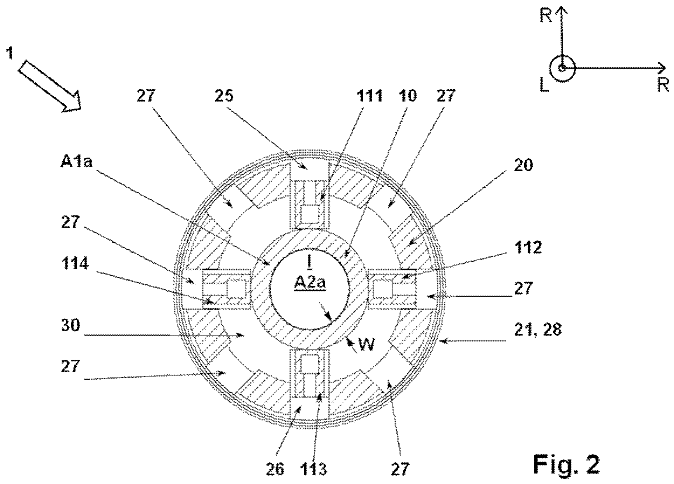

In Fig. 1 erkennt man einen Längsschnitt mit einer Welle 100, die in einer Lagerhülse 1 gelagert ist. Letztere ist wiederum in einem Lagersitz 201 eines Lagergehäuses 200 festgelegt. Zusätzlich findet sich in Fig. 2 ein Querschnitt B-B durch die Lagerhülse 1 nach Fig. 1. Gleiche Bauteile sind in den Fig. 1 und 2 gleich beschriftet.

Gemäß Fig.1 hat die Lagerhülse 1 eine rohrförmige Hülse 10, die sich in einer Längsrichtung L erstreckt (vgl. auch Fig. 2). Hülse 10 und Welle 100 haben in der Darstellung eine deckungsgleiche Längsachse A. Im Inneren I der Hülse 10 sind ein erstes Radiallager 11 und ein in Längsrichtung L beabstandetes zweites Radiallager 12 angeordnet. Gehaltert werden die Radiallager 11, 12 jeweils durch über den Umfang der Hülse 10 gleichmäßig verteilt angeordnete Fixierschrauben 111, 112, 121, 122, die jeweils von außen in die Hülse 10 eingeschraubt sind. Für die Fixierschrauben 111, 112, 121, 122 sind in der Hülse 10 Gewindelöcher ausgebildet. Mit dem eingeschraubten Schraubenende S1, S2, S3, S4, bzw. mit einer Stirnplatte, greifen die Fixierschrauben 111, 112, 121, 122 jeweils in eine Vertiefung 15, 16 ein, die am Außenumfang des Radiallagers 11, 12 ausgebildet ist. Anhand des Schnittes B-B in Fig. 2 erkennt man, dass insbesondere das erste Radiallager 11 durch zwei weitere in Fig. 1 jedoch nicht erkennbare Fixierschrauben 113, 114 fixiert ist.

Gemäß Fig. 1 ist die Hülse 10 an ihren Längsenden 13, 14 offen ausgebildet und hat hier jeweils eine innenseitig umlaufende Einführschräge 17, 18. In das Innere I der Hülse ist die Welle 100 eingeführt und durchragt in Längsrichtung L die beiden Radiallager 11, 12. Zwischen der Welle 100 und der Hülse 10 ist ein Ringspalt ausgebildet. Mithin steht die Welle 100 nur über die Radiallager 11, 12 mit der Lagerhülse 1 in Verbindung.

Die Wandstärke W der Hülse 10 (vgl. auch Fig. 2) ist im Bereich der Radiallager 11, 12 im Wesentlichen homogen. Außerdem weichen die Querschnittsflächen A1a, A1b (vgl. auch Fig. 2) der Hülse 10 jeweils im Bereich der Radiallager 11, 12 um maximal 10 Prozent von der Aufnahmequerschnittsfläche A2a, A2b der Radiallager 11, 12 ab, wobei die Aufnahmequerschnittsfläche A2a, A2b der Querschnittsfläche der Welle 100 (vgl. auch Fig. 2) entspricht. Zusätzlich sind die zwei Längsenden 13, 14 der Hülse 10 knapp gehalten und stehen gleich weit über die beiden Radiallager 11, 12 hinaus.

Die Hülse 10 ist radial R innerhalb von einer Manschette 20 angeordnet (vgl. auch Fig. 2). Auch die Längsachse der Manschette 20 fällt in Fig.1 auf die Längsachse L der Welle 100. Zwischen der Hülse 10 und der Manschette 20 verbleibt ein Ringspalt 30. In Längsrichtung L beabstandet von den beiden Radiallagern 11, 12 ist die Manschette 20 mit der Hülse 10 verbunden V. Die Verbindung V liegt dabei in Längsrichtung L mittig zwischen den beiden Radiallagern 11, 12. Man erkennt, dass die Hülse 10 und die Manschette 20 einteilig, insbesondere monolithisch ausgebildet sind. Dadurch sind die Manschette 20 und die Hülse 10 drehfest und axialfest miteinander verbunden. Die Manschette 20 ist in Längsrichtung L kürzer als die Hülse 10 und hat eine glockenförmige Grundform. Insbesondere verjüngt sich die Manschette 20 glockenförmig in Richtung der Verbindung V. Ein von der Verbindung V mit der Hülse 10 wegweisendes erstes Ende 22 der Manschette 20 ist hierdurch als freier Schenkel ausgebildet. Dieser umfasst den Ringspalt 30 in radialer Richtung R. Entsprechend ist der Ringspalt 30 in Längsrichtung L einseitig offen ausgebildet. Das zweite Ende 23 der Manschette 20 ist mit der Hülse 10 verbunden. Der hier ausgebildete Verbindungsbereich V zwischen der Hülse 10 und der Manschette 20 hat eine größere Wandstärke als der Rest der Hülse 10 und der Rest der Manschette 20. Außerdem verfügt der Verbindungsbereich V über sanfte Übergänge mit Kehlradien.

Ein weiteres erkennbares Merkmal sind zwei in der Manschette 20 ausgebildete Längsschlitze 25, 26. Im Schnitt B-B der Fig. 2 sind sechs weitere Längsschlitze 27 zu sehen. Sowohl nach Fig. 1 als auch nach Fig. 2 sind die Längsschlitze 25, 26, 27 über den Umfang der Manschette 20 gleichverteilt angeordnet. Außerdem sind sie endseitig geschlossen ausgebildet. Die Fixierschrauben 111, 112, 113 sind jeweils durch einen der Längsschlitze 25, 26, 27 hindurch zugängig, beziehungsweise betätigbar.

Man erkennt weiterhin insbesondere in Fig.1 (vgl. hilfsweise auch Fig. 2), dass die Manschette 20 in Längsrichtung L beabstandet von der Verbindung V mit der Hülse 10 eine Lageraufnahme 21 zur Fixierung der Lagerhülse 1 in einem Lagersitz 201 aufweist. Insbesondere ist die Lageraufnahme 21 in Längsrichtung L am ersten Ende 22 der Manschette 20 gelegen. Damit ist der Ringspalt 30 in radialer Richtung R zwischen der Lageraufnahme 21 und der Hülse 10 positioniert. Bezeichnete Lageraufnahme 21 ist die einzige Lageraufnahme. Ansonsten sind die Hülse 10 und die Manschette 20 von einem radialen Freiraum F umgeben.

Ausgestaltet ist die Lageraufnahme 21 als ein radial R umlaufender Absatz 28, bzw. Flansch, mit einer zylindrischen Außenfläche und einer senkrecht zur Längsrichtung L ausgerichteten, planen ersten Anschlagfläche 29. Die Hülse 10 steht in Längsrichtung L nicht über die plane erste Anschlagfläche 29 der Manschette 20 hinaus. Insbesondere weist die Hülse 10 eine senkrecht zur Längsrichtung L ausgerichtete, plane zweite Anschlagfläche 19 auf. Dabei liegen die erste Anschlagfläche 29 der Manschette 20 und die zweite Anschlagfläche 19 der Hülse 10 in einer gemeinsamen Ebene E.

Mit der Lageraufnahme 21 ist die Lagerhülse 1 in einen Lagersitz 201 eines Lagergehäuses 200 eingesetzt. Der Lagersitz 201 hat eine zylindrische radiale Lagersitzeinfassung 202 und eine senkrecht hierzu angeordnete plane axiale Lagersitzfläche 202, welche den Boden des Lagersitzes 201 ausbildet. Um einfach in den Lagersitz 201 eingeführt werden zu können, verfügt die Manschette 20 am ersten Ende 22 über eine außenseitig umlaufende Einführschräge 24.

In der gezeigten eingeführten Position der Lagerhülse 1 liegt die zylindrische Außenfläche der Lageraufnahme 21 und die Lagersitzeinfassung 202 aneinander an. Beide haben hierfür einen auf Passung abgestimmten Zylinderdurchmesser. Zusätzlich liegen die erste Anschlagfläche 29 der Manschette 20 und die zweite Anschlagfläche 19 der Hülse 10 auf der Lagersitzfläche 202 des Lagersitzes 201 auf. Die Manschette 20 ist hierdurch über die Passung der Lageraufnahme 21 im Lagersitz 201 radial und in eine Längsrichtung L fixiert. Die Hülse 21 kann mit ihrer zweiten Anschlagfläche 19 hingegen in der Ebene E radial um die Längsachse A schwimmen.

## Patentansprüche

1. Lagerhülse (1) zur Lagerung einer Welle (100), mit einer rohrförmigen Hülse (10), die sich in einer Längsrichtung (L) erstreckt, und in deren Inneren (I) ein erstes Radiallager (11)
sowie in Längsrichtung (L) beabstandet vom ersten Radiallager (11) ein zweites Radiallager (12) angeordnet ist, **dadurch gekennzeichnet, dass** die Hülse (10) radial (R) innerhalb von einer Manschette (20) angeordnet ist, wobei zwischen der Hülse (10) und der Manschette (20) ein Ringspalt (30) ausgebildet und die Manschette (20) in Längsrichtung (L) beabstandet von den beiden Radiallagern (11, 12) mit der Hülse (10) verbunden (V) ist.

2. Lagerhülse (1) nach Anspruch 1,
**dadurch gekennzeichnet, dass** die Manschette (20) in Längsrichtung (L) zwischen den beiden Radiallagern (11, 12) mit der Hülse (10) verbunden (V) ist.

3. Lagerhülse (1) nach einem der Ansprüche 1 oder 2,
**dadurch gekennzeichnet, dass** die Verbindung (V) zwischen der Hülse (10) und der Manschette (20) in Längsrichtung (L) um maximal 10 Prozent außermittig zwischen den beiden Radiallagern (11, 12) angeordnet ist.

4. Lagerhülse (1) nach einem der vorhergehenden Ansprüche,
**dadurch gekennzeichnet, dass** die Hülse (10) und die Manschette (20) einteilig ausgebildet sind.

5. Lagerhülse (1) nach einem der vorhergehenden Ansprüche,
**dadurch gekennzeichnet, dass** die Manschette (20) in Längsrichtung (L) kürzer ist als die Hülse (10).

6. Lagerhülse (1) nach einem der vorhergehenden Ansprüche,
**dadurch gekennzeichnet, dass** die Manschette (20) glockenförmig ausgebildet ist.

7. Lagerhülse (1) nach einem der vorhergehenden Ansprüche,
**dadurch gekennzeichnet, dass** sich die Manschette (20) glockenförmig in Richtung der Verbindung (V) mit der Hülse (10) radial (R) verjüngt.

8. Lagerhülse (1) nach einem der vorhergehenden Ansprüche,
**dadurch gekennzeichnet, dass** die Manschette (20) in Längsrichtung (L) beabstandet von der Verbindung (V) mit der Hülse (10) eine Lageraufnahme (21) zur Fixierung der Lagerhülse (1) in einem Lagersitz (201) aufweist.

9. Lagerhülse (1) nach Anspruch 8,
**dadurch gekennzeichnet, dass** die Lageraufnahme (21) an einem von der Verbindung (V) zwischen der Hülse (10) und der Manschette (20) beabstandeten ersten Ende (22) der Manschette (20) angeordnet ist.

10. Lagerhülse (1) nach einem der vorhergehenden Ansprüche,
**dadurch gekennzeichnet, dass** die Manschette (20) eine senkrecht zur Längsrichtung (L) ausgerichtete plane erste Anschlagfläche (29) aufweist.

11. Lagerhülse (1) nach Anspruch 10,
**dadurch gekennzeichnet, dass** die Hülse (10) in Längsrichtung (L) nicht über die plane erste Anschlagfläche (29) der Manschette (20) hinaussteht.

12. Lagerhülse (1) nach einem der vorhergehenden Ansprüche,
**dadurch gekennzeichnet, dass** die Wandstärke (W) der Hülse (10) im Bereich der Radiallager (10, 20) im Wesentlichen homogen ist.

13. Lagerhülse (1) nach einem der vorhergehenden Ansprüche,
**dadurch gekennzeichnet, dass** die Querschnittsflächen (A1a, A1b) der Hülse (10) jeweils im Bereich der Radiallager (11, 12) um maximal 10 Prozent von der Aufnahmequerschnittsfläche (A2a, A2b) der Radiallager (11, 12) abweicht.

## Claims

1. Bearing sleeve (1) for mounting a shaft (100), having a tubular sleeve (10) which extends in a longitudinal direction (L), and in the interior (I) of which a first radial bearing (11) and, spaced apart from the first radial bearing (11) in the longitudinal direction (L), a second radial bearing (12) are arranged, **characterized in that** the sleeve (10) is arranged radially (R) within a collar (20), an annular gap (30) being configured between the sleeve (10) and the collar (20), and the collar (20) being connected (V) to the sleeve (10) in a manner which is spaced apart from the two radial bearings (11, 12) in the longitudinal direction (L).

2. Bearing sleeve (1) according to Claim 1, **characterized in that** the collar (20) is connected (V) to the sleeve (10) between the two radial bearings (11, 12) in the longitudinal direction (L).

3. Bearing sleeve (1) according to either of Claims 1 and 2, **characterized in that** the connection (V) between the sleeve (10) and the collar (20) is arranged between the two radial bearings (11, 12) in an off-centre manner by at most 10% in the longitudinal direction (L).

4. Bearing sleeve (1) according to one of the preceding claims, **characterized in that** the sleeve (10) and the collar (20) are configured in one piece.

5. Bearing sleeve (1) according to one of the preceding claims, **characterized in that** the collar (20) is shorter in the longitudinal direction (L) than the sleeve (10).

6. Bearing sleeve (1) according to one of the preceding claims, **characterized in that** the collar (20) is of bell-shaped configuration.

7. Bearing sleeve (1) according to one of the preceding claims, **characterized in that** the collar (20) tapers radially (R) in a bell-shaped manner in the direction of the connection (V) to the sleeve (10).

8. Bearing sleeve (1) according to one of the preceding claims, **characterized in that**, in a manner which is spaced apart in the longitudinal direction (L) from the connection (V) to the sleeve (10), the collar (20) has a bearing holder (21) for fixing the bearing sleeve (1) in a bearing seat (201).

9. Bearing sleeve (1) according to Claim 8, **characterized in that** the bearing holder (21) is arranged at a first end (22) of the collar (20), which first end (22) is spaced apart from the connection (V) between the sleeve (10) and the collar (20).

10. Bearing sleeve (1) according to one of the preceding claims, **characterized in that** the collar (20) has a planar first stop face (29) which is oriented perpendicularly with respect to the longitudinal direction (L).

11. Bearing sleeve (1) according to Claim 10, **characterized in that** the sleeve (10) does not project in the longitudinal direction (L) beyond the planar first stop face (29) of the collar (20).

12. Bearing sleeve (1) according to one of the preceding claims, **characterized in that** the wall thickness (W) of the sleeve (10) is substantially homogeneous in the region of the radial bearings (10, 20).

13. Bearing sleeve (1) according to one of the preceding claims, **characterized in that** the cross-sectional areas (A1a, A1b) of the sleeve (10) differ in each case in the region of the radial bearings (11, 12) by at most 10% from the holder cross-sectional area (A2a, A2b) of the radial bearings (11, 12).

## Revendications

1. Douille-palier (1) pour le support d'un arbre (100), comprenant une douille de forme tubulaire (10) qui s'étend dans une direction longitudinale (L) et à l'intérieur (I) de laquelle est disposé un premier palier radial (11), et à distance du premier palier radial (11), dans la direction longitudinale (L), un deuxième palier radial (12), **caractérisée en ce que** la douille (10) est disposée radialement (R) à l'intérieur d'un manchon (20), une fente annulaire (30) étant réalisée entre la douille (10) et le manchon (20) et le manchon (20) étant connecté (V) à la douille (10) dans la direction longitudinale (L) à distance des deux paliers radiaux (11, 12).

2. Douille-palier (1) selon la revendication 1, **caractérisée en ce que** le manchon (20) est connecté (V) à la douille (10) dans la direction longitudinale (L) entre les deux paliers radiaux (11, 12).

3. Douille-palier (1) selon l'une quelconque des revendications 1 ou 2,
**caractérisée en ce que** la connexion (V) entre la douille (10) et le manchon (20) dans la direction longitudinale (L) est disposée de manière décentrée de 10 pour cent au maximum entre les deux paliers radiaux (11, 12).

4. Douille-palier (1) selon l'une quelconque des revendications précédentes,
**caractérisée en ce que** la douille (10) et le manchon (20) sont réalisés d'une seule pièce.

5. Douille-palier (1) selon l'une quelconque des revendications précédentes,
**caractérisée en ce que** le manchon (20) est plus court que la douille (10) dans la direction longitudinale (L).

6. Douille-palier (1) selon l'une quelconque des revendications précédentes,
**caractérisée en ce que** le manchon (20) est réalisé en forme de cloche.

7. Douille-palier (1) selon l'une quelconque des revendications précédentes,
**caractérisée en ce que** le manchon (20) se rétrécit radialement (R) en forme de cloche dans la direction de la connexion (V) à la douille (10).

8. Douille-palier (1) selon l'une quelconque des revendications précédentes,
**caractérisée en ce que** le manchon (20) présente un logement de palier (21) à distance de la connexion (V) à la douille (10) dans la direction longitudinale (L), pour la fixation de la douille-palier (1) dans un siège de palier (201).

9. Douille-palier (1) selon la revendication 8,
**caractérisée en ce que** le logement de palier (21) est disposé au niveau d'une première extrémité (22) du manchon (20) espacée de la connexion (V) entre la douille (10) et le manchon (20).

10. Douille-palier (1) selon l'une quelconque des revendications précédentes,
**caractérisée en ce que** le manchon (20) présente une première surface de butée plane (29) orientée perpendiculairement à la direction longitudinale (L).

11. Douille-palier (1) selon la revendication 10, **caractérisée en ce que** la douille (10) ne dépasse pas au-delà de la première surface de butée plane (29) du manchon (20) dans la direction longitudinale (L).

12. Douille-palier (1) selon l'une quelconque des revendications précédentes,
**caractérisée en ce que** l'épaisseur de paroi (W) de la douille (10) dans la région des palier radiaux (10, 20) est essentiellement homogène.

13. Douille-palier (1) selon l'une quelconque des revendications précédentes,
**caractérisée en ce que** les surfaces en section transversale (A1a, A1b) de la douille (10) s'écartent à chaque fois dans la région des paliers radiaux (11, 12) de 10 pour cent au maximum de la surface en section transversale de réception (A2a, A2b) des paliers radiaux (11, 12).
